# EUROPEAN PATENT SPECIFICATION

(11) **EP 2 554 869 B1**
(45) Date of publication and mention of the grant of the patent: **26.04.2017**
(21) Application number: 12179175.0
(22) Date of filing: 03.08.2012
(51) Int. Cl.: F16D 48/06

(54) **POWER TRANSMISSION APPARATUS**
KRAFTÜBERTRAGUNGSVORRICHTUNG
APPAREIL DE TRANSMISSION DE PUISSANCE

(30) Priority: 03.08.2011 JP 2011170420
(43) Date of publication of application: 06.02.2013
(73) Proprietor: Aisin AI Co., Ltd., Nishio-shi, Aichi 445-0006 (JP)
(72) Inventor: Kariya, Masahiro, Nishio-shi, Aichi-ken, Aichi 445-0006 (JP); Miyazaki, Takeshige, Nishio-shi, Aichi-ken, Aichi 445-0006 (JP); Tsujimura, Manabu, Nishio-shi, Aichi-ken, Aichi 445-0006 (JP)
(74) Representative: TBK

(56) References cited:
- EP-A2- 2 177 781
- WO-A1-2007/078225
- DE-A1- 10 153 328
- DE-A1- 10 209 100
- DE-A1- 19 747 925
- DE-A1- 19 850 978
- JP-A- 2009 174 632

## Description

### TECHNICAL FIELD

The present invention relates to a power transmission apparatus in a vehicle including an internal combustion engine.

### BACKGROUND ART

As transmissions for vehicles, there are a manual transmission in which a driver mechanically carries out a speed-shifting operation and an automatic transmission in which the speed-shifting operation is automatically carried out. A general manual transmission includes, in many cases, a plurality of driving gears which are fixed to either an input shaft to which power is input from a power source (such as internal combustion engine) or an output shaft which transmits power to driving wheels of a vehicle, a plurality of idling gears which always mesh with the driving gears and which are disposed on the output shaft or the input shaft such that the idling gears can idle, and a synchronizer which rotate a gear on the input shaft and a gear on the output shaft in synchronization with each other to be coupled to each other. Since power transmission efficiency of the manual transmission is excellent, there is the automatic transmission based on the manual transmission, including an apparatus for controlling output of a power source, an apparatus for controlling engagement and disengagement of a clutch interposed between a power source and the automatic transmission, an apparatus which selects and shifts gears, a control apparatus for controlling these apparatuses, and the like (e.g., JP2002-129997).

Vehicles provided with torque converters as one kind of the automatic transmission are widely used. It is known that, for the torque converter, a so-called creep occurs due to its structural characteristics. The creep is a phenomenon in which when a brake pedal of a vehicle in a stopped state is released, the vehicle gradually accelerates. Hence, a passenger who rides on a vehicle with an automatic transmission may understand that the vehicle can reach a certain vehicle speed by the creep.

Hence, also in an AMT and a dual clutch transmission (referred as the AMT or the like, thereinafter) in which a dry-type or wet-type clutch is employed and a creep does not occur in itself, it is proposed to realize a similar phenomenon as the creep in a pseudo manner by half clutch (i.e., the state in which power is transmitted with a clutch slipping) so that even if a driver changes his or her vehicle to a vehicle with a torque converter type automatic transmission, the driver does not feel something uncomfortable.

### SUMMARY OF INVENTION

When a vehicle runs up a hill or runs on a road surface having a great running resistance such as muddy road and gravel road, swift acceleration by a creep can not be expected, and the creep (half clutch) may be continued for a long time in some cases.

In the wet-type clutch and the dry-type clutch employed in the AMT, if the creep state continues for a long time, problems such as progression of wear or overheating of a clutch plate may occur.

The present invention has been accomplished in view of the above-described circumstances, and it is an object of the invention to provide a power transmission apparatus capable of carrying out appropriate control in a creep state. The disclosure DE19747925 A1 is considered to be the closest prior art.

To solve the above problem, a first aspect of the present invention provides a power transmission apparatus includes:
an internal combustion engine revolution number sensor which measures a revolution number of an output shaft of an internal combustion engine;
a transmission which includes an input shaft to which power is transmitted from the output shaft of the internal combustion engine, and an output shaft which transmits the power to driving wheels of a vehicle, and which can adjust a speed reduction ratio that is a ratio of a revolution number of the input shaft to the revolution number of the output shaft;
an input shaft revolution number acquisition means which acquires the revolution number of the input shaft of the transmission;
a clutch which is interposed between the output shaft of the internal combustion engine and the input shaft of the transmission, and which is adjusted between an engaged state where at least a portion of power is transmitted between the output shaft of the internal combustion engine and the input shaft of the transmission and a disengaged state where the power is not transmitted;
an actuator which varies a clutch torque in the engaged state;
a vehicle speed acquisition means which acquires a speed of the vehicle; and
a control device for controlling the actuator to gradually increase the clutch torque until the difference between the revolution number of the input shaft which is input from the input shaft revolution number acquisition means and the revolution number of the output shaft which is input from the internal combustion engine revolution number sensor becomes less than the predetermined value, and controlling the internal combustion engine to gradually increase an output torque from the output shaft after increasing the clutch torque, when the clutch is in the engaged state and if a creep state, in which a difference between the revolution number of the input shaft which is input from the input shaft revolution number acquisition means and the revolution number of the output shaft which is input from the internal combustion engine revolution number sensor is not less than a predetermined value, continues for predetermined time or more, at a vehicle speed of not more than a predetermined speed which is input from the vehicle speed acquisition means after the vehicle starts moving by an operation of a brake pedal which instructs a braking force applied to the vehicle based on a magnitude of a driver's operation.

According to a second aspect of the invention, in the first aspect, an increasing speed of the engine torque has a negative correlation with respect to a magnitude of the revolution number of the output shaft, and has a positive correlation with respect to a reducing speed of the revolution number of the output shaft, and
the longer continuation time of the creep state is, the greater an increasing speed of the clutch torque becomes.

According to a third aspect of the invention, in any one of the first and second aspects, an increasing speed of the engine torque and/or an increasing speed of the clutch torque has a positive correlation with respect to the difference between the revolution number of the input shaft and the revolution number of the output shaft.

In the first aspect of the invention, when the creep state continues for the predetermined time, it is determined that necessary acceleration of the vehicle can not be obtained. In response to the determination, the clutch torque is increased so that output of the internal combustion engine is increasingly transmitted to the input shaft of the transmission, and output of the internal combustion engine is also gradually increased. Thus, it is possible to establish a sufficient driving force and to realize swift acceleration. As a result, it is possible to suppress use of the half clutch for maintaining the creep state. Further, by increasing the clutch torque after the engine torque is increased, the engine (internal combustion engine) is prevented from racing.

In the second aspect of the invention, the increasing speed of the engine torque is controlled to be greater as the revolution number of the output shaft of the internal combustion engine is smaller, or as the reducing speed of the revolution number of the output shaft is greater. According to this configuration, it is possible to prevent the engine from stalling.

The increasing speed of the clutch torque is configured to be greater as the continuation time of the creep state is longer. According to this configuration, the magnitude of the clutch torque eventually becomes greater than the magnitude of the engine torque, and it is possible to reliably shift the so-called half clutch state to the engaged state having no slip.

In the third aspect of the invention, the increasing speed of the engine torque and/or the clutch torque is slowed down when the difference between the revolution number of the input shaft and the revolution number of the output shaft becomes small. According to this configuration, it is possible to reduce an impact caused by abrupt increase of the driving force.

### BRIEF DESCRIPTION OF DRAWINGS

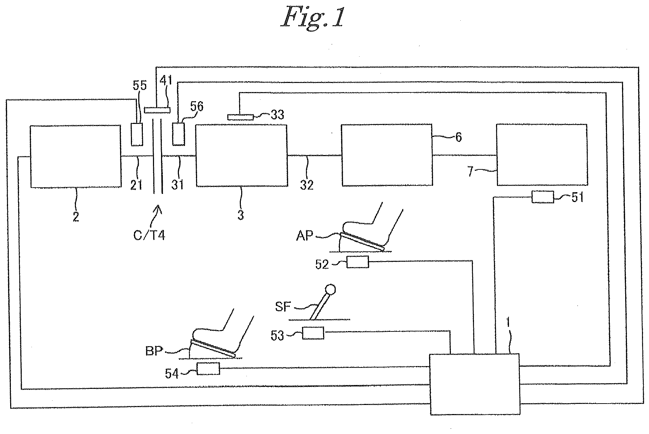

Fig. 1 is a schematic block diagram of a power transmission apparatus according to the present embodiment;
Fig. 2 is a control flowchart of a control device provided in the power transmission apparatus of the present embodiment;
Fig. 3 is a time chart concerning essential constituent elements of the power transmission apparatus which are controlled by the control device provided in the power transmission apparatus of the present embodiment;
Figs. 4A and 4B show one example of a determining method of an increasing amount (increasing speed) when the power transmission apparatus of the embodiment increases a magnitude (A) of a clutch torque and a magnitude (B) of an engine torque; and
Fig. 5 is a time chart concerning essential constituent elements which is controlled by a control device provided in a conventional power transmission apparatus.

### MODE FOR CARRYING OUT THE INVENTION

A power transmission apparatus of the present invention will be described below in detail based on an embodiment. The power transmission apparatus of the embodiment is mounted in a vehicle. The vehicle uses an internal combustion engine 2 as a power source. The power transmission apparatus of the embodiment includes an internal combustion engine revolution number sensor 55, a transmission 3, an input shaft revolution number sensor 56 (corresponding to input shaft revolution number acquisition means), a clutch 4, an actuator 41, a vehicle speed sensor 51 (corresponding to vehicle speed acquisition means) and a control device 1.

The internal combustion engine revolution number sensor 55 measures the revolution number of an output shaft 21 of the internal combustion engine 2. The transmission 3 includes an input shaft 31 to which power from the output shaft 21 of the internal combustion engine 2 is transmitted, and an output shaft 32 which transmits the power to driving wheels 7 of the vehicle. The internal combustion engine revolution number sensor 55 is configured to adjust a speed reduction ratio which is a ratio of the revolution number of the input shaft 31 to the revolution number of the output shaft 32. The transmission 3 is not specified. For example, a speed-shifting of the transmission 3 may be manually or automatically operated, and the transmission 3 may be a stage transmission or a non-stage transmission such as a continuously variable transmission. The input shaft revolution number sensor 56 (corresponding to input shaft revolution number acquisition means) measures the revolution number of the input shaft 31 of the transmission 3. Instead of the input shaft revolution number sensor 56, it is also possible to use means for calculating the revolution number of the input shaft from a vehicle speed using a transmission gear ratio of the transmission.

The clutch 4 is interposed between the output shaft 21 of the internal combustion engine 2 and the input shaft 31 of the transmission 3. The clutch 4 is a means which can be adjusted between an engaged state where at least a portion of power is transmitted between the output shaft 21 of the internal combustion engine 2 and the input shaft 31 of the transmission 3 and a disengaged state where power is not transmitted. The engaged state where a portion of power is transmitted includes all of states, from a so-called half clutch state with the clutch 4 slipping where an engine torque which is output to the output shaft 21 of the internal combustion engine 2 is greater than a clutch torque which is associated with engagement of the clutch 4, to a state with the clutch 4 not-slipping where the clutch torque is greater than the engine torque. In the half clutch state of the clutch 4, even if a vehicle is stopped and the number of revolutions of the input shaft 31 of the transmission 3 is zero, the internal combustion engine 2 is not stopped. The clutch 4 is operated by the later-described actuator 41, and engagement and disengagement of the clutch 4 is controlled by the later-described control device 1. The clutch 4 may be of wet-type or dry-type, a degree of power transmission is controlled by changing a degree of abutment of two or more opposed friction plates (clutch torque).

The actuator 41 is means for varying a clutch torque of the clutch 4 especially in its engaged state, and, in addition, can switch between the engaged state and the disengaged state. In the disengaged state, the clutch torque becomes completely zero. The actuator 41 controls a magnitude of the clutch torque by varying a degree of abutment of the friction plates of the clutch 4.

The vehicle speed sensor 51 measures a speed of the vehicle. The vehicle speed sensor 51 may measure an actual vehicle speed, or may measure events related to the vehicle speed to calculate the vehicle speed (revolution number of wheels of vehicle, or revolution number of input shaft and/or output shaft of transmission). The vehicle speed sensor 51 may calculate the vehicle speed taking a transmission gear ratio of the transmission 3 into account by a measured value of the input shaft revolution number sensor 56. In this embodiment, the vehicle speed sensor 51 measures the revolution number of the driving wheels 7, and calculates the vehicle speed from the measured revolution number of the driving wheels.

The control means 1 controls the magnitude of the clutch torque and the engine torque output from the internal combustion engine 2 based on: a state of a brake pedal BP provided in the vehicle; the vehicle speed which is input from the vehicle speed sensor 51; an operation state of the actuator 41 (whether actuator 41 is in engaged state, and if actuator 41 is in engaged state or not, whether actuator 41 is in the so-called half clutch state or not); the revolution number of the output shaft 21 which is input from the internal combustion engine revolution number sensor 55; and the revolution number of the input shaft 31 which is input from the input shaft revolution number sensor 56. The control means 1 may control other devices. The control means 1 appropriately carries out the speed-shifting operation by operation of a shift lever SF.
- Control method of control means (method of determining whether vehicle should be brought into creep state, and controlling a creep after vehicle is brought into creep state: creeping process)

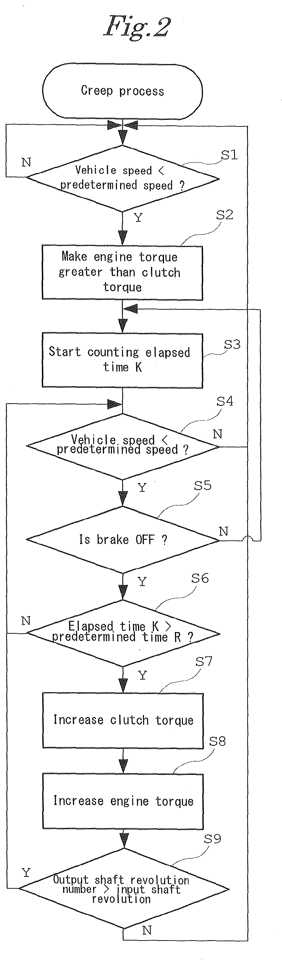

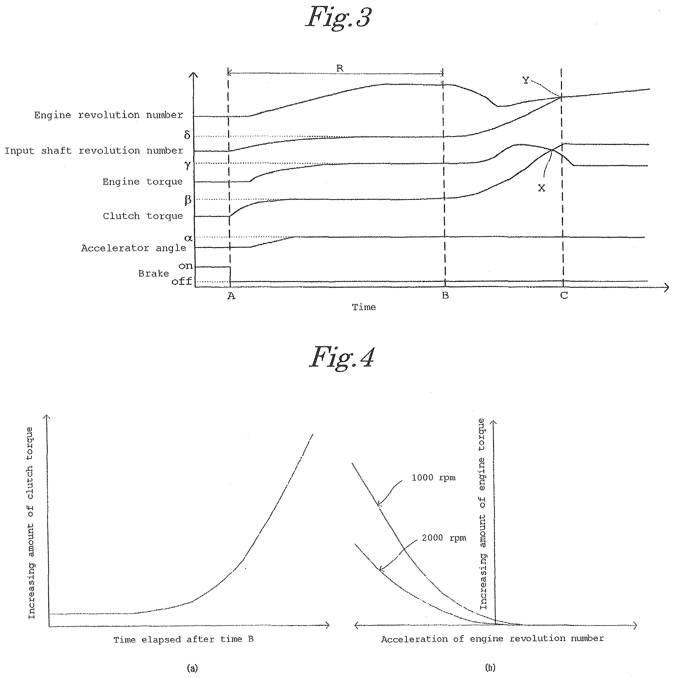

A method that the control means 1 controls the creep (creep process) will be described below with reference to Figs. 2 and 3. The following description is based on an example in which a vehicle starts accelerating from a stopped state (state of not more than predetermined speed), but this method can similarly be applied to a case where the vehicle speed becomes not more than a predetermined speed by deceleration caused by a braking operation of a driver.

When the vehicle speed is equal to or lower than the predetermined speed, the control device 1 makes the vehicle creep. A value of the predetermined speed is not specified, and the speed is set to an appropriate value. For example, this speed is set to a value that can effortlessly be achieved with the revolution number of the output shaft 21 in an idling state of the internal combustion engine 2.

Examples of a case where the vehicle speed becomes equal to or lower than the predetermined speed include a case where the vehicle accelerates from the stopped state, and a case where the vehicle is decelerated to the predetermined speed from a state where the vehicle is running at a speed higher than the predetermined speed. In any of the cases, when the vehicle speed becomes equal to or lower than the predetermined speed, the vehicle is brought into the creep state. When the vehicle is transited to the creep state by deceleration, the predetermined speed is defined as a reference speed. However, another speed may be set as a reference speed at which the vehicle is transited to the creep state by deceleration.

The control means 1 operates the actuator 41 to control the magnitude of the clutch torque of the clutch 4 to be smaller than that of the engine torque. According to this control, the clutch 4 is brought into the so-called half clutch state, and maintains the creep state. The magnitude of the engine torque is calculated from a state of the internal combustion engine 2 (amounts of air and fuel supplied to internal combustion engine 2 and the revolution number of output shaft). The magnitude of the clutch torque is controlled to be smaller than that of the calculated engine torque. It is also effective to control the actuator 41 to have a difference greater than an error between the revolution number of the output shaft 21 and the revolution number of the input shaft 31. For example, when the revolution number of the input shaft 31 corresponding to the current vehicle speed is excessively low such that the internal combustion engine 2 is possibly stopped by directly coupling the input shaft 31 to the output shaft 21, it is preferable that the magnitude of the clutch torque is controlled so that a difference greater than the error between the number of revolutions of the output shaft 21 and the number of revolutions of the input shaft 31 is generated (so that the revolution number of the output shaft 21 becomes greater than such a number of revolutions that the internal combustion engine 2 can stably be operated).

Control in the creep state will be described based on a flowchart (Fig. 2) and a time chart (Fig. 3). First, it is determined whether the vehicle speed (revolution number of the input shaft is used instead of vehicle speed in Fig. 3, and the revolution number of the input shaft and the vehicle speed are proportional to each other) is not more than a predetermined speed (S1). When the condition S1 is satisfied, the state of the vehicle is transited to the creep state (S2). Thereafter, control (S3 and thereafter) corresponding to the creep state is carried out (time A and thereafter in Fig. 3). Transition to the creep state in S2 is carried out by controlling the magnitude of the clutch torque to be smaller than the one of the engine torque (target clutch torque) while controlling the magnitude of the engine torque to be a predetermined magnitude (target engine torque) determined in accordance with an accelerator angle determined by a degree of operation of an accelerator pedal AP. To simplify the explanation, the embodiment is based on an assumption that the angle of the accelerator pedal AP starts changing from time A and thereafter is operated quickly to be fixed to a given magnitude , and that a component of the target engine torque (portion of component excluding component changed in later-described step S8) which is determined only by the angle of the accelerator pedal AP is also constant ( ). When the accelerator angle is not constant, a value of the engine torque which corresponds to the accelerator angle is set as the target engine torque.

The target clutch torque is set to such a magnitude ( ) where the clutch 4 slips and the half clutch state can be maintained (S2). Thereafter, the magnitude of the engine torque and the magnitude of the clutch torque are controlled toward the target values. If control toward the target values is swiftly carried out, a shock occurs. Therefore, control is appropriately carried out with such a delay that the shock does not occur. That is, the magnitude of the engine torque is firs controlled to be the target value and then, the magnitude of the clutch torque is controlled to gradually approach the target clutch torque (e.g., after time A in Fig. 3).

Next, elapsed time K is counted from zero (S3). The following control is carried out while counting the elapsed time K. When the process is shifted from S2, time is counted after transition to the creep state (after time A).

It is determined whether the vehicle speed is not more than a predetermined speed, and if the vehicle speed is not more than the predetermined speed, the procedure is shifted to step S5. If the vehicle speed exceeds the predetermined speed, the creep process is completed, and procedure transits to S1, where it is determined whether the procedure should be again shifted to the creep process (S4). If a running resistance of the vehicle is small and necessary acceleration can be obtained in the current state, the creep process is completed in step S4.

In step S5, it is determined whether the brake pedal BP is operated or not. If the brake pedal BP is not operated (brake is OFF), the procedure is shifted to next step S6. When the brake pedal BP is operated, the elapsed time K is reset to zero, and the procedure is shifted to step S3 to start counting the elapsed time K. When the brake pedal BP is operated, it should be proper to determine that the driver tries to decelerate the vehicle. Therefore, if a long time elapsed after the vehicle state is shifted to the creep state, it can be estimated that this is a driver's will, that is, the driver does not feel something uncomfortable. It is preferable that the counting of the elapsed time K when the vehicle is shifted from the stopped state to the creep state is not started upon the brake pedal is completely released (brake OFF state), but is started upon the vehicle starts moving. If the vehicle starts moving while remaining a braking force of the brake as a result of releasing the brake pedal little by little, it is reasonable to recognize that the creep state starts from that time, in terms of a purpose to reduce uncomfortable feeling caused by continuation of the creep state. That is, even from the state the braking force remains slightly to the state before the brake is completely turned OFF, if the vehicle starts moving, it is recognized that the creep state continues. However, even if the vehicle starts moving before the brake is completely turned OFF, if the brake pedal is further depressed, it is estimated that the driver tries to decelerate the vehicle. Therefore, it is preferable to reset the elapsed time K.

In step S6, it is determined whether the elapsed time K becomes equal to or longer than predetermined time R. Since the elapsed time K is time during which the creep state is maintained without operating the brake pedal BP, it is proper to determine that the driver expects the vehicle to be accelerated to some extent. Hence, when the elapsed time K becomes equal to or longer than predetermined time R (after time B in Fig. 3), the procedure is shifted to the following steps (S7 to S9) so that the vehicle can accelerate to a predetermined speed expected to be achieved by continuation of the creep state. When the elapsed time K does not reach the predetermined time R (between time A and time B in Fig. 3), it is determined to be proper that the current creep state is continued as it is. Thus, the procedure is returned to step S4, and the control is continued. It is preferable that the value of the predetermined time R is set to time in which the driver starts feeling something uncomfortable due to insufficient acceleration of the vehicle, or the value shorter than that, and more specifically, the predetermined time R can optionally be set.

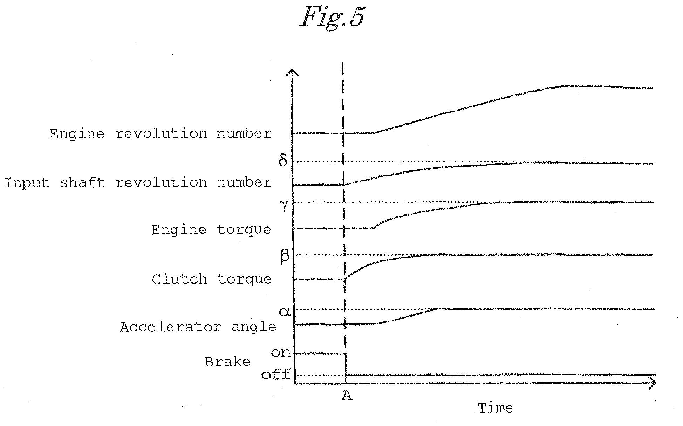

According to the conventional control of the power transmission apparatus, steps S6 and S3 do not exist. Therefore, the revolution number of the engine and the revolution number of the input shaft are brought into steady states in their predetermined magnitudes as shown in Fig. 5. Accordingly, when the running condition is not changed, the creep state is continued without any end, resulting in driver's uncomfortable feeling.

In step S7, control is carried out such that the clutch torque is gradually increased (after time B in Fig. 3). The magnitude of the clutch torque can be controlled by gradually increasing the magnitude of the target clutch torque, but in addition to the method of changing the value of the target clutch torque ( ), it is also possible to set a correction value to be added to the target clutch torque for correction when the clutch torque is determined. The magnitude of the clutch torque is also controlled to such a value that the internal combustion engine 2 is not stopped. The magnitude of the clutch torque increases such that it sooner or later exceeds the magnitude of the engine torque when the vehicle speed becomes such a level that the internal combustion engine 2 is not stopped even in the half clutch state maintained (in Fig. 3 for example, magnitude of clutch torque becomes equal to that of engine torque at an intersection point X, and exceeds the engine torque thereafter).

It is preferable that the longer the continuation time of the creep state is, the greater an increasing speed of the clutch torque becomes (Fig. 4A). By such a configuration, it becomes possible to reliably increase the magnitude of the clutch torque, and it is possible to reliably transit the half clutch state to a completely engaged state (the state that revolution number of output shaft 21 and revolution number of input shaft 31 completely match with each other and clutch engages (Y) at time C in Fig. 3).

In step S8, the internal combustion engine 2 is controlled such that the engine torque is gradually increased. The magnitude of the engine torque can be controlled by gradually increasing the above-described magnitude of the target engine torque ( ), but in addition to the method of changing the value of the target engine torque, it is also possible to control the magnitude of the engine torque by setting a correction value to be added to the target engine torque for correction when the engine torque is determined. It is preferable that the engine torque is increased in step S8 in a delayed fashion after the magnitude of the clutch torque is changed so that an increase amount of the engine torque is not more than an amount of the clutch torque increased in step S7 (preferably less than that of the clutch torque) (e.g., a degree of increase of magnitude of engine torque is delayed from a degree of increase of magnitude of clutch torque between time B and time C in Fig. 3). This is because if the engine torque is increased before the clutch torque is increased, the internal combustion engine 2 is raced in some cases, and the driver feels something uncomfortable.

It is preferable that the increasing speed of the engine torque is set to have a positive correlation with respect to smallness of the revolution number of the output shaft 21 and a reducing speed of the revolution number of the output shaft 21 (Fig. 4B). That is, as the revolution number of the internal combustion engine 2 is smaller, or as the reducing speed of the revolution number is faster, the possibility that the internal combustion engine 2 is stopped becomes higher. Therefore, control is carried out such that the engine torque is swiftly increased to stabilize the state of the internal combustion engine 2.

It is preferable that the increasing speed of at least one of the engine torque and the clutch torque becomes smaller as a difference between the revolution number of the input shaft and the revolution number of the output shaft becomes smaller. For example, the increasing speed of the engine torque becomes smaller in Fig. 3.

That is, by reducing the increasing speed of at least one of the engine torque and the clutch torque, an increasing speed of a driving force is reduced. Therefore, it is preferable that the smaller the difference between the revolution numbers is, the smaller the increasing speed of the driving force becomes.

In step S9, it is determined whether the difference between the revolution number of the output shaft 21 and the revolution number of the input shaft 31 is not less than a predetermined value, and if the difference is not less than the predetermined value (clutch 4 is in half clutch state), the procedure is returned to next step S4. If the difference is less than the predetermined value (time C in Fig. 3), the creep process is completed, and the procedure is returned to step S1.

Although the preferred embodiment of the invention has been described above, the invention is not limited to the embodiment.

## Claims

1. A power transmission apparatus comprising:
an internal combustion engine revolution number sensor which measures a revolution number of an output shaft of an internal combustion engine;
a transmission which includes an input shaft to which power is transmitted from the output shaft of the internal combustion engine, and an output shaft which transmits the power to driving wheels of a vehicle, and which adjust a speed reduction ratio that is a ratio of a revolution number of the input shaft to the revolution number of the output shaft;
an input shaft revolution number acquisition means which acquires the revolution number of the input shaft of the transmission;
a clutch which is interposed between the output shaft of the internal combustion engine and the input shaft of the transmission, and which is adjusted between an engaged state where at least a portion of power is transmitted between the output shaft of the internal combustion engine and the input shaft of the transmission and a disengaged state where the power is not transmitted;
an actuator which varies a clutch torque in the engaged state;
a vehicle speed acquisition means which acquires a speed of the vehicle; and **characterised by** a control device for controlling the actuator to gradually increase the clutch torque until the difference between the revolution number of the input shaft which is input from the input shaft revolution number acquisition means and the revolution number of the output shaft which is input from the internal combustion engine revolution number sensor becomes less than the predetermined value, and controlling the internal combustion engine to gradually increase an output torque from the output shaft after increasing the clutch torque, when the clutch is in the engaged state and if a creep state, in which a difference between the revolution number of the input shaft which is input from the input shaft revolution number acquisition means and the revolution number of the output shaft which is input from the internal combustion engine revolution number sensor is not less than a predetermined value, continues for predetermined time or more, at a vehicle speed of not more than a predetermined speed which is input from the vehicle speed acquisition means after the vehicle starts moving by an operation of a brake pedal which instructs a braking force applied to the vehicle based on a magnitude of a driver's operation.

2. The power transmission apparatus according to claim 1, wherein:
an increasing speed of the engine torque has a negative correlation with respect to a magnitude of the revolution number of the output shaft, and has a positive correlation with respect to a reducing speed of the revolution number of the output shaft; and
the longer continuation time of the creep state is, the greater an increasing speed of the clutch torque becomes.

3. The power transmission apparatus according to any one of claims 1 and 2, wherein:
an increasing speed of the engine torque and/or an increasing speed of the clutch torque has a positive correlation with respect to the difference between the revolution number of the input shaft and the revolution number of the output shaft.

## Patentansprüche

1. Leistungsübertragungsgerät mit:
einem Brennkraftmaschinendrehzahlsensor, der eine Drehzahl einer Ausgangswelle einer Brennkraftmaschine misst;
einem Getriebe, das eine Eingangswelle, zu der eine Leistung von der Ausgangswelle der Brennkraftmaschine übertragen wird, und eine Ausgangswelle hat, die die Leistung zu Antriebsrädern eines Fahrzeugs überträgt, und das ein Geschwindigkeitsuntersetzungsverhältnis einstellt, das ein Verhältnis einer Drehzahl der Eingangswelle zu der Drehzahl der Ausgangswelle ist;
einer Eingangswellendrehzahlermittlungseinrichtung, die die Drehzahl der Eingangswelle des Getriebes ermittelt;
einer Kupplung, die zwischen der Ausgangswelle der Brennkraftmaschine und der Eingangswelle des Getriebes angeordnet ist und die zwischen einem eingerückten Zustand, in dem wenigstens ein Teil einer Leistung zwischen der Ausgangswelle der Brennkraftmaschine und der Eingangswelle des Getriebes übertragen wird, und einem ausgerückten Zustand eingestellt wird, in dem die Leistung nicht übertragen wird;
einem Stellglied, das ein Kupplungsdrehmoment in dem eingerückten Zustand ändert;
einer Fahrzeuggeschwindigkeitsermittlungseinrichtung, die eine Geschwindigkeit des Fahrzeugs ermittelt; und
**gekennzeichnet durch**
eine Steuerungsvorrichtung zum Steuern des Stellglieds, um das Kupplungsmoment allmählich zu erhöhen, bis die Differenz zwischen der Drehzahl der Eingangswelle, die von der Eingangswellendrehzahlermittlungseinrichtung eingegeben wird, und der Drehzahl der Ausgangswelle, die von dem Brennkraftmaschinendrehzahlsensor eingegeben wird, geringer wird als der vorbestimmte Wert, und zum Steuern der Brennkraftmaschine, um ein Ausgangsmoment von der Ausgangswelle nach Erhöhen des Kupplungsmoments allmählich zu erhöhen, wenn die Kupplung in dem eingerückten Zustand ist und falls ein Kriechzustand, in dem eine Differenz zwischen der Drehzahl der Eingangswelle, die von der Eingangswellendrehzahlermittlungseinrichtung eingegeben wird, und der Drehzahl der Ausgangswelle, die von dem Brennkraftmaschinendrehzahlsensor eingegeben wird, nicht geringer ist als ein vorbestimmter Wert, für eine vorbestimmte Zeit oder mehr anhält, bei einer Fahrzeuggeschwindigkeit von nicht mehr als einer vorbestimmten Geschwindigkeit, die von der Fahrzeuggeschwindigkeitsermittlungseinrichtung eingegeben wird, nachdem das Fahrzeug sich zu bewegen beginnt **durch** eine Betätigung eines Bremspedals, das eine Bremskraft anweist, die auf das Fahrzeug aufgebracht wird, auf der Basis einer Größe einer Betätigung **durch** einen Fahrer.

2. Leistungsübertragungsgerät nach Anspruch 1, wobei:
eine Erhöhungsgeschwindigkeit des Maschinenmoments eine negative Korrelation mit Bezug auf eine Größe der Drehzahl der Ausgangwelle hat und eine positive Korrelation mit Bezug auf eine Verringerungsgeschwindigkeit der Drehzahl der Ausgangswelle hat; und
je länger eine Fortführungszeit des Kriechzustandes ist, desto größer eine Erhöhungsgeschwindigkeit des Kupplungsmoments wird.

3. Leistungsübertragungsgerät nach einem der Ansprüche 1 und 2, wobei:
eine Erhöhungsgeschwindigkeit des Maschinenmoments und/oder eine Erhöhungsgeschwindigkeit des Kupplungsmoments eine positive Korrelation mit Bezug auf die Differenz zwischen der Drehzahl der Eingangswelle und der Drehzahl der Ausgangswelle hat.

## Revendications

1. Appareil de transmission de puissance comprenant :
un détecteur de nombre de tours d'un moteur à combustion interne qui mesure un nombre de tours d'un arbre de sortie d'un moteur à combustion interne ;
une transmission qui comprend un arbre d'entrée auquel une puissance est transmise par l'arbre de sortie du moteur à combustion interne, et un arbre de sortie qui transmet la puissance aux roues motrices d'un véhicule, et qui ajuste un rapport de réduction de vitesse qui est un rapport entre un nombre de tours de l'arbre d'entrée et le nombre de tours de l'arbre de sortie ;
un moyen d'acquisition du nombre de tours de l'arbre d'entrée qui acquière le nombre de tours de l'arbre d'entrée de la transmission ;
un embrayage qui est interposé entre l'arbre de sortie du moteur à combustion interne et l'arbre d'entrée de la transmission, et qui est ajusté entre un état engagé dans lequel au moins une partie de la puissance est transmise entre l'arbre de sortie du moteur à combustion interne et l'arbre d'entrée de la transmission et un état désengagé dans lequel la puissance n'est pas transmise ;
un actionneur qui fait varier un couple d'embrayage dans l'état engagé ;
un moyen d'acquisition de vitesse du véhicule qui acquiert une vitesse du véhicule ; et
**caractérisé par**
un dispositif de commande destiné à contrôler l'actionneur afin d'augmenter progressivement le couple d'embrayage jusqu'à ce que la différence entre le nombre de tours de l'arbre d'entrée qui est fourni par le moyen d'acquisition du nombre de tours de l'arbre d'entrée et le nombre de tours de l'arbre de sortie qui est fourni par le détecteur de nombre de tours du moteur à combustion interne devienne inférieure à la valeur prédéterminée, et à contrôler le moteur à combustion interne afin d'augmenter progressivement un couple de sortie de l'arbre de sortie après avoir augmenté le couple d'embrayage, lorsque l'embrayage est dans l'état engagé et dans un état de progression, dans lequel une différence entre le nombre de tours de l'arbre d'entrée qui est fourni par le moyen d'acquisition du nombre de tours de l'arbre d'entrée et le nombre de tours de l'arbre de sortie qui est fourni par le détecteur de nombre de tours du moteur à combustion interne n'est pas inférieure à une valeur prédéterminée, et se poursuit pendant une durée prédéterminée ou au-delà, à une vitesse du véhicule non supérieure à une vitesse prédéterminée qui est fournie par le moyen d'acquisition de vitesse du véhicule après que le véhicule a commencé à se déplacer à la suite de l'actionnement d'une pédale de frein qui applique une force de freinage au véhicule sur la base d'une magnitude d'une opération du conducteur.

2. Appareil de transmission de puissance selon la revendication 1, dans lequel :
une vitesse d'augmentation du couple du moteur présente une corrélation négative par rapport à une magnitude du nombre de tours de l'arbre de sortie, et présente une corrélation positive par rapport à une vitesse de réduction du nombre de tours de l'arbre de sortie ; et
plus la durée de continuation de l'état de progression est longue, plus la vitesse d'augmentation du couple d'embrayage est élevée.

3. Appareil de transmission de puissance selon l'une quelconque des revendications 1 et 2, dans lequel :
une vitesse d'augmentation du couple du moteur et/ou une vitesse d'augmentation du couple d'embrayage présente une corrélation positive par rapport à la différence entre le nombre de tours de l'arbre d'entrée et le nombre de tours de l'arbre de sortie.
